# EUROPEAN PATENT APPLICATION

(11) **EP 3 493 125 A1**
(43) Date of publication of application: **05.06.2019**
(21) Application number: 17834319.0
(22) Date of filing: 25.07.2017
(51) Int. Cl.: G06Q 10/06, A63F 7/02

(54) **SERVER AND COMPUTER PROGRAM FOR SERVER**

(30) Priority: 26.07.2016 JP 2016146463
(71) Applicant: Suncorporation, Konan-shi Aichi 483-8555 (JP)
(72) Inventor: GOTO Satoru, Konan-shi Aichi 483-8555 (JP)
(74) Representative: Rupprecht, Kay
(86) International application number: PCT/JP2017/026879
(87) International publication number: WO 2018/021317

(57) **Abstract**

A server may include: an operation information obtaining unit configured to obtain operation information from each of one or more devices that are arranged in a target area in accordance with a first layout, each of the operation information including identification information for identifying its corresponding device among the one or more devices and operation state information indicating an operation state of the corresponding device; a storage controlling unit configured to store the operation information obtained from each of the one or more devices in a storage device; a first prediction unit configured to generate first prediction data including a predicted value for a future operation state of a target device among the one or more devices by using stored operation information stored in the storage device, the target device being arranged at a first position in the target area in accordance with the first layout; a layout information obtaining unit configured to obtain changed layout information related to a second layout being different from the first layout, the target device being arranged at a second position in the target area in the second layout, the second position being different from the first position; and a second prediction unit that generates second prediction data including a predicted value for a future operation state of the target device arranged at the second position in the target area by using the changed layout information and the stored operation information, in a case where the changed layout information is obtained.

## Description

### TECHNICAL FIELD

A technique disclosed herein relates to a server configured to generate prediction data based on information related to a device.

### BACKGROUND

For example, Nikkei Electronics 1-6-2014 "Rediscovering M2M" (hereinbelow termed Non-Patent Literature 1) describes a system that monitors operation states of construction machines, a system that monitors operation states of elevators, a system that collects sales record information of vending machines and the like, as examples of systems that use M2M (abbreviation of Machine To Machine) communication.

Each of such systems in Non-Patent Literature 1 is provided with a server and devices (such as the construction machines, the elevators, the vending machines, and the like). The server obtains, from each of the devices, information indicating an operation state of the device. The server uses the obtained information to execute analysis of the operation state of each device.

### SUMMARY

For example, a business entity who sells products using vending machines (that is, a system administrator) arranges a plurality of vending machines respectively at predetermined positions within a predetermined community in accordance with a desired layout. An operation state of each vending machine may change according to characteristics of the position where it is arranged (e.g., a traffic volume of pedestrians during daytime, characteristics such as age group, gender, and occupation of the pedestrians, and characteristics regarding other nearby vending machines that are present). Due to this, before actually arranging the vending machines in accordance with the desired layout and operating them, the business entity demands to simulate predicted values for the operation states of the vending machines in a case where the vending machines are to be arranged in accordance with that layout.

The disclosure herein provides a technique capable of assisting determination on a layout for arranging devices in a target area.

One aspect disclosed herein is a server that may comprise: an operation information obtaining unit configured to obtain operation information from each of one or more devices that are arranged in a target area in accordance with a first layout, each of the operation information including identification information for identifying its corresponding device among the one or more devices and operation state information indicating an operation state of the corresponding device; a storage controlling unit configured to store the operation information obtained from each of the one or more devices in a storage device; a first prediction unit configured to generate first prediction data including a predicted value for a future operation state of a target device among the one or more devices by using stored operation information stored in the storage device, the target device being arranged at a first position in the target area in accordance with the first layout; a layout information obtaining unit configured to obtain changed layout information related to a second layout being different from the first layout, the target device being arranged at a second position in the target area in the second layout, the second position being different from the first position; and a second prediction unit configured to generate second prediction data including a predicted value for a future operation state of the target device arranged at the second position in the target area by using the changed layout information and the stored operation information, in a case where the changed layout information is obtained.

The aforementioned "target area" includes a predetermined area within a store such as a game store, a community such as a predetermined city and province, and the like. The aforementioned "device" includes any device configured to be capable of outputting operation information indicating its operation state, such as a game machine unit, an amusement machine, a vending machine, and a store (that is, a management terminal that is arranged in a store and is configured to manage sales and the like of the store). The "server" may be one device, or may be a combination of a plurality of devices. The aforementioned "storage device" may be a device such as a semiconductor memory and a hard disk drive. This device may be provided in the server, or may be connected with the server via a network (e.g., via a LAN (abbreviation of Local Area Network), via the Internet). Further, the aforementioned "storage device" may be a device for temporary storage, or may be a device for permanent storage.

According to the above configuration, the server uses the stored operation information to generate the first prediction data including the predicted value for the future operation state of the target device arranged in accordance with the first layout. Further, in the case of obtaining the changed layout information related to the second layout different from the first layout, the server uses the changed layout information and the stored operation information to generate the second prediction data including the predicted value for the future operation state of the target device arranged in accordance with the second layout. For example, the server provides the first prediction data and the second prediction data to an administrator of the one or more devices by using arbitrary means, by which the administrator can compare the predicted value for the future operation state of the target device included in the first prediction data with the predicted value for the future operation state of the target device included in the second prediction data. Based on the comparison result, the administrator can determine an optimal layout in which the target device can be operated in a desired operation state. As such, the aforementioned server can assist the determination on the layout for arranging the devices in the target area.

The storage device may further store position history information related to a position at which one device among the one or more devices was arranged in the target area in the past. The first prediction unit may generate the first prediction data by using the stored operation information and the position history information. The second prediction unit may generate the second prediction data by using the stored operation information, the changed layout information, and the position history information.

Here, the "position history information" includes, for example, position information indicating a position where the device was arranged in the past, and time indicating a starting point of a period during which the device has been arranged at this position. According to the above configuration, by referring to the stored operation information and the position history information, the server can specify the position where the device was arranged in the past and the operation state information indicating the operation state of the device while it was arranged at this position. Then, the server can further use those information to generate the first and second prediction data. Due to this, accuracy of the predicted value indicated by the first prediction data and the predicted value indicated by the second prediction data can be improved.

The storage device may further store user behavior information related to behavior of a user in the target area. The first prediction unit may generate the first prediction data by using the stored operation information and the user behavior information. The second prediction unit may generate the second prediction data by using the stored operation information, the changed layout information, and the user behavior information.

Here, the "user behavior information" includes, for example, information indicating behavior of a user in a game store since the user entered the store until the user exits the store (staying time, in-store travel distance and travel route, time spent by sitting in front of a game machine unit, etc.). According to the above configuration, the server can take the user's behavior into account to generate the first and second prediction data. Due to this, the accuracy of the predicted value indicated by the first prediction data and the predicted value indicated by the second prediction data can be improved.

The storage device may further store characteristic information related to an environmental characteristic of the target area. The first prediction unit may generate the first prediction data by using the stored operation information and the characteristic information. The second prediction unit may generate the second prediction data by using the stored operation information, the changed layout information, and the characteristic information.

Here, the "environmental characteristic" includes, for example, characteristics of an operating location of a game store (e.g., its external characteristics such as location access conditions, community characteristics, and surrounding facilities) and characteristics of the game store itself (e.g., its internal characteristics such as an occupying area of the game store and positions of an entrance and an exit of the game store), and the "characteristic information" includes information indicating these characteristics. According to the above configuration, the server can take the environmental characteristic into account to generate the first and second prediction data. Due to this, the accuracy of the predicted value indicated by the first prediction data and the predicted value indicated by the second prediction data can be improved.

The storage device may further store average data that indicates an average value of operation states of two or more devices included in a device group to which the target device belongs. The first prediction unit may generate the first prediction data by using the stored operation information and the average data. The second prediction unit may generate the second prediction data by using the stored operation information, the changed layout information, and the average data.

Here, the "device group" includes, for example, a group related to an attribute of the target device, such as a model of the target device in a case where the target device is a game machine unit, and a type of specialty in a case where the target device is a restaurant (such as a western food restaurant, a Japanese food restaurant, and a sushi restaurant). The server can generate the first and second prediction data by taking into account the average value of the two or more operation states included in the device group to which the target device belongs. Due to this, the accuracy of the predicted value indicated by the first prediction data and the predicted value indicated by the second prediction data can be improved.

The changed layout information may indicate the second layout that is related to an arrangement of a plurality of devices including one or more new devices, the one or more new devices not being included in the one or more devices arranged in the target area.

Here, for example, in a case where the target area is a game store, the "new device" includes a game machine unit that is not yet arranged in the game store at present but is to be arranged in the future (that is, a hypothetical game machine unit). According to the above configuration, the server can generate the second prediction data including predicted values for future operation states of the new devices. Due to this, the administrator can acknowledge the future operation states of the new devices.

The target area may be one store, and each of the one or more devices may be a device arranged in the store in accordance with the first layout.

The target area may be one community, and each of the one or more devices may be a store arranged in the community in accordance with the first layout.

Another aspect disclosed herein is a server that may comprise: a future layout information obtaining unit configured to obtain future layout information related to a future layout for arranging one or more devices in a target area, a target device among the one or more devices being arranged at a specific position in the target area in the future layout; and a prediction unit configured to generate specific prediction data that includes a predicted value for a future operation state of the target device arranged at the specific position by using operation related information stored in a storage device and the obtained future layout information in a case where the future layout information is obtained, the operation related information being related to an operation state of each of plural types of devices, and the target device being a specific type of device among the plural types of devices.

According to the above configuration, in the case where the future layout information is obtained, the server generates the specific prediction data that includes the predicted value indicating the future operation state of the target device arranged at the specific position by using the operation related information and the future layout information. For example, the server provides the specific prediction data to the administrator of the one or more devices by using an arbitrary means, by which the administrator can acknowledge the predicted value for the future operation state of the target device included in the specific prediction data. In accordance with the predicted value, the administrator can determine an optimal layout in which the target device can be operated in a desired operation state. As such, the above server can assist the determination on the layout for arranging the one or more devices in the target area.

A control method, a computer program and a non-transitory computer-readable medium storing the computer program for implementation of each of the above servers are also novel and useful.

### BRIEF DESCRIPTION OF THE DRAWINGS

FIG. 1 shows a configuration of a communication system according to first and second embodiments;
FIG. 2 shows a flowchart of a prediction process;
FIG. 3 shows a sequence diagram indicating a specific case in which the prediction process is executed;
FIG. 4 shows examples of screens that are displayed on a terminal device before a layout is changed;
FIG. 5 shows examples of screens that are displayed on the terminal device after the layout is changed; and
FIG. 6 shows a configuration of a communication system according to a third embodiment.

### EMBODIMENTS

### (First Embodiment)

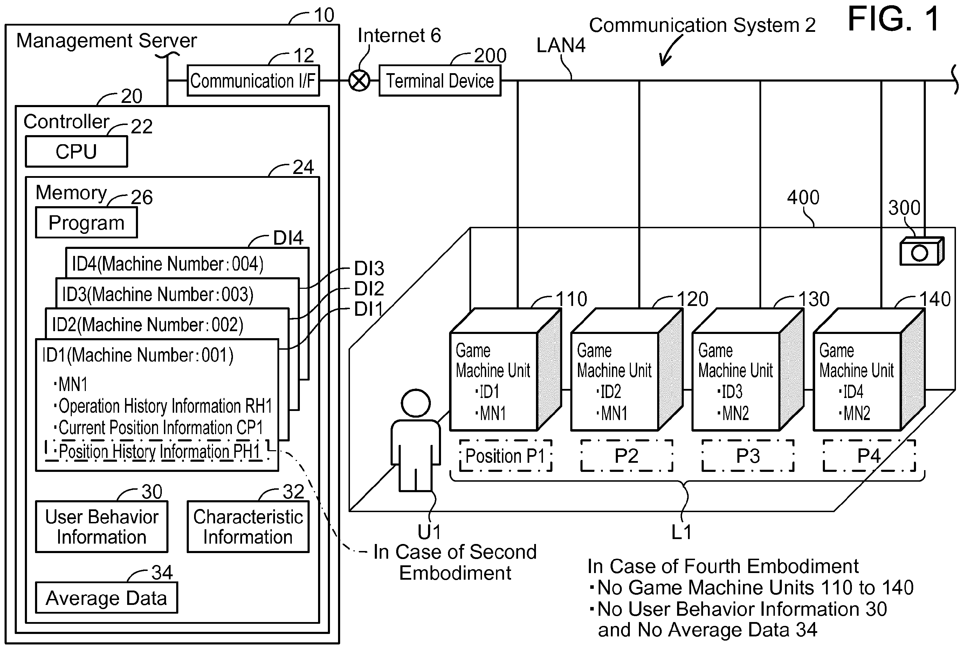

### (Configuration of Communication System 2; FIG. 1)

A communication system 2 shown in FIG. 1 is a system for providing a service of predicting operation states of respective game machine units that are installed in a game store. As shown in FIG. 1, the communication system 2 is provided with a management server 10, a terminal device 200, a plurality of game machine units 110 to 140, and a video camera 300. The terminal device 200, the game machine units 110 to 140, and the video camera 300 are provided in a game store 400. For easier understanding, FIG. 1 is depicted in a state in which the terminal device 200 is arranged outside a box (with the reference sign 400 of FIG. 1) representing the game store. The terminal device 200, the game machine units 110 to 140, and the video camera 300 are all connected to a LAN (abbreviation of Local Area Network) 4 and are capable of communicating with each other through the LAN 4. The management server 10 is provided outside the game store 400. The management server 10 and the terminal device 200 are connected to the Internet 6 and are capable of communicating with each other through the Internet 6. In a variant, the management server 10 may not be connected to the Internet 6 and may be connected to the LAN 4. That is, the management server 10 may be provided in the game store 400 and may be capable of communicating with the terminal device 200 through the LAN 4.

### (Configurations of Game Machine Units 110 to 140)

The game machine units 110 to 140 are arranged in one game store 400 in accordance with a current layout L1. The current layout L1 indicates respective arranged positions where a plurality of game machine units including the game machine units 110 to 140 is actually arranged in the game store 400. The current layout L1 defines a position of each of the plurality of game machine units in the game store 400 (that is, a plurality of positions including positions P1 to P4). That is, in an example of FIG. 1, the game machine units 110 to 140 are currently arranged at the positions P1 to P4, respectively. For example, the position P1 indicates a machine unit position at an end of a predetermined island within the game store 400, the position P2 indicates a machine unit position adjacent to the position P1, the position P3 indicates a machine unit position adjacent to the position P2, and the position P4 indicates a machine unit position adjacent to the position P3.

The game machine unit 110 is a device that includes a pachinko gaming machine which uses pachinko balls as its gaming medium and peripheral devices thereof (such as a call lamp, a medium counter, and a medium purchase machine). In another example, the game machine unit 110 may be a device that includes a slot machine which uses medals as its gaming medium and peripheral devices thereof. The "game machine unit" herein can be interpreted as a device that includes at least one of a game machine (such as pachinko gaming machine or slot machine), a call lamp, a medium counter, and a medium purchase machine. The same applies to other game machine units 120 to 140 as well.

The game machine unit 110 is allocated with identification information "ID1". The identification information "ID1" is unique information (such as a manufacturing serial number) for identifying the game machine unit 110. Similarly, other game machine units (such as the game machine unit 120) are allocated with their identification information (such as "ID2"). Further, the game machine units 110, 120 are game machine units of a same model (that is, model type), and their model name is "MN1". Similarly, the game machine units 130, 140 are game machine units of a same model (that is, model type), and their model name is "MN2".

The game machine unit 110 generates operation information related to an operation state of its own every predetermined period (such as every 10 minutes) and supplies the same to the terminal device 200. The operation information includes the identification information "ID1" and operation state information indicating the operation state (such as information related to game contents (out number, safe number, a number of times of special prize, a number of times of odds change, etc.)). The operation information further includes time information indicating time when the game machine unit 110 generated the operation information. The out number is a total number of times a signal (so-called out signal), which is generated in a case where a gaming medium is inputted to a game machine unit, was generated (that is, the total number in the game store 400 for that day since a store opening time). The safe number is a total number of times a signal (so-called safe signal), which is generated in a case where a gaming medium is discharged from a game machine unit, was generated. The number of times of special prize is a total number of times a game machine unit shifted to a special prize state. The number of times of odds change is a total number of times a game machine unit shifted to an odds-changing (odds change) state, which is an advantageous state for the user, after completion of the special prize state. Similarly, other game machine units 120 to 140 also supply their operation information to the terminal device 200 every predetermined period.

### (Configuration of Video Camera 300)

The video camera 300 is an image capturing device arranged on a ceiling of the game store 400. The video camera 300 captures images of behavior of a user (that is, a customer) U1 in the game store 400. The video camera 300 generates image data in which the behavior of the user U1 is captured and supplies the same to the terminal device 200 every predetermined period (such as every 10 minutes).

### (Configuration of Terminal Device 200)

The terminal device 200 is a computer (so-called hall computer) installed by an administrator of the game store 400 (such as a store manager of the game store 400) and is a device for managing the plurality of game machine units in the game store 400. The terminal device 200 is provided with a display unit, an operation unit, and a controller that are not shown. The display unit is a display configured to display various types of information. The operation unit includes a keyboard and a mouse. The administrator of the game store 400 can operate the operation unit to input various instructions to the terminal device 200. The controller includes a CPU and a memory. The CPU is configured to execute various processes according to a program stored in the memory. The memory stores the aforementioned program and further stores the operation information obtained from each of the plurality of game machine units in the game store 400 and the image data obtained from the video camera 300. That is, the terminal device 200 obtains the operation information from each of the plurality of game machine units in the game store 400 and the image data from the video camera 300 through the LAN 4. The terminal device 200 stores the obtained operation information and image data in the memory. The terminal device 200 supplies the operation information and the image data in the memory to the management server 10 every predetermined period.

Further, when a game machine unit is to be newly arranged in the game store 400, the administrator operates the operation unit to input to the terminal device 200 various types of information indicating characteristics of this game machine unit (such as identification information of the game machine unit, a model name of the game machine unit, and a machine number of this game machine unit in the game store 400) in order to register the various types of information related to the game machine unit in the terminal device 200. Here, the machine number is a number which the administrator uniquely allocates to each of the game machine units in the game store 400 to identify them from one another. For example, in the example of FIG. 1, the game machine unit 110 (the identification information "ID1", the model name "MN1") is allocated with a machine number "001". The inputted various types of information (which will be hereinbelow termed "machine information") are stored in the memory of the terminal device 200. In a case where there are plural game machine units to be newly arranged in the game store 400, the administrator inputs machine information of each of the game machine units, similarly. As a result, the memory of the terminal device 200 stores the machine information respectively corresponding to the game machine units 110 to 140 currently arranged in the game store 400.

Further, for each of the game machine units indicated by the machine information, the administrator inputs current position information indicating the position where the game machine unit is arranged in the game store 400 (such as P1 in FIG. 1) to the terminal device 200 by operating the operation unit. Each of the inputted current position information is stored in the memory in association with the machine information indicating its corresponding game machine unit.

Further, the CPU of the terminal device 200 supplies the combinations of the machine information and the current position information stored in the memory to the management server 10 every predetermined timing.

Further, in a case of changing the position of a game machine unit in the game store 400, the administrator changes the current position information associated with the machine information of the game machine unit whose position is to be changed (that is, position information indicating its position before the change) to current position information indicating a newly arranged position (that is, position information indicating its position after the change). In this case, the current position information associated with the machine information of the game machine unit whose position is to be changed is updated to position information indicating the newly arranged position thereof. After this, the CPU of the terminal device 200 supplies the combinations of the machine information and the current position information stored in the memory to the management server 10 every predetermined timing. That is, the memory of the terminal device 200 stores at all times the information indicating the game machine units and their arranged positions in the game store 400 at present (that is, the combinations of the machine information and the current position information). Further, the latest combinations of the machine information and the current position information stored in the memory of the terminal device 200 are supplied to the management server 10 every predetermined timing.

Further, the administrator inputs characteristic information of the game store 400 to the terminal device 200 in advance by operating the operation unit. The characteristic information is information related to environmental characteristics of the game store 400. The environmental characteristics include characteristics of an operating location of the game store 400 (for example, its external characteristics such as a distance from public transportation (such as a station and a bus stop) and information on surrounding stores and factories) and characteristics of the game store 400 itself (for example, its internal characteristics such as an occupying area of the game store, a number of entrance(s) to the game store, and positions of the entrances). The inputted characteristic information is stored in the memory of the terminal device 200. Then, the CPU of the terminal device 200 supplies the characteristic information in the memory to the management server 10 in advance. In a case where the administrator updates contents of the characteristic information as well, the CPU supplies the updated characteristic information in the memory to the management server 10 as needed.

### (Configuration of Management Server 10)

The management server 10 is a server provided by a service provider that uses the communication system 2 to provide the service of predicting future operation states of the respective game machine units. In the example of FIG. 1, the management server 10 is connected to the terminal device 200 in the game store 400 via the Internet 6, however, in the actual communication system 2, the management server 10 is also connected to a management device (not shown) of another game store via the Internet 6.

The management server 10 is provided with a communication interface 12 and a controller 20. The units 12, 20 are connected to a bus line (reference sign thereof is omitted). Hereinbelow, an interface will be denoted as "I/F". The communication I/F 12 is connected to the Internet 6. The controller 20 includes a CPU 22 and a memory 24. The CPU 22 is configured to execute various processes according to a program 26 stored in the memory 24. The memory 24 is constituted of a volatile memory, a nonvolatile memory and the like.

Aside from the aforementioned program 26, the memory 24 stores a plurality of device information DI1 to DI4. The plurality of device information DI1 to DI4 respectively corresponds to the game machine units 110 to 140 provided in the game store 400. The device information DI1 (that is, the information corresponding to the game machine unit 110) includes the identification information "ID1", the machine number "001", the model name "MN1", operation history information RH1 indicating a history of its operation state information, and current position information CP1 indicating the position where the game machine unit is currently arranged. The operation history information RH1 is information in which the operation state information and the time information included in the operation information that is obtained from the terminal device 200 and includes the identification information "ID1" are accumulated (that is, information indicating the operation states of the game machine unit 110). That is, the operation history information RH1 is a database of the operation state information of the game machine unit 110 indicated by the identification information "ID1". The current position information CP1 is the current position information combined with the machine information including the identification information "ID1" and obtained from the terminal device 200. That is, the current position information CP1 indicates the position where the game machine unit 110 is currently arranged in the game store 400.

A specific process by which the device information DI1 is stored in the memory 24 will be described. As aforementioned, the terminal device 200 supplies the combinations of the machine information and the current position information to the management server 10 every predetermined timing. When obtaining the combinations of the machine information and the current position information from the terminal device 200, the CPU 22 of the management server 10 specifies a combination including the identification information "ID1" from among the obtained combinations. In a case where the device information DI1 corresponding to the identification information "ID1" is not stored in the memory 24 (that is, in a case where a combination corresponding to the identification information "ID1" is newly obtained), the CPU 22 newly generates the device information DI1 including the respective information included in the specified combination and causes the memory 24 to store the generated device information DI1. On the other hand, in a case where the device information DI1 corresponding to the identification information "ID1" is already stored in the memory 24, the CPU 22 compares the respective information included in the specified combination with the respective information included in the device information DI1 stored in the memory 24. Then, in a case where the respective information included in the specified combination do not match the respective information included in the device information DI1 stored in the memory 24 (that is, at least a part of the respective information included in the specified combination has been updated), the CPU 22 causes the respective information included in the specified combination to be newly stored as replacement of the respective information included in the device information DI1 stored in the memory 24 (that is, updates the respective information included in the device information DI1).

As such, for example, in a case where the position (such as P1) indicated by the current position information CP1 included in the device information DI1 stored in the memory 24 is different from the position (such as P2) indicated by the current position information included in the specified combination, the CPU 22 causes the position (such as P2) indicated by the current position information included in the specified combination to be newly stored (that is, updated) as the position indicated by the current position information CP1 included in the device information DI1.

Further, as aforementioned, the terminal device 200 supplies the operation information obtained from each of the game machine units to the management server 10 every predetermined period. For example, when obtaining the operation information corresponding to each of the game machine units after the device information DI1 has been stored in the memory 24, the CPU 22 of the management server 10 specifies the operation information including the identification information "ID1" (that is, the operation information of the game machine unit 110). Then, the CPU 22 specifies the device information DI1 associated with the identification information "ID1" from the memory 24, and adds the operation state information and the time information included in the operation information of the game machine unit 110 to the operation history information RH1.

The memory 24 further stores user behavior information 30, characteristic information 32, and average data 34. The characteristic information 32 is the characteristic information obtained from the terminal device 200.

The user behavior information 30 indicates behavior of a user in the game store 400. The CPU 22 generates the user behavior information 30 by analyzing the image data, which represents images captured by the video camera 300 and is obtained from the terminal device 200, in accordance with a predetermined method. For example, the CPU 22 uses a face recognition technique to extract images indicating people from a video represented by video data, and specifies a plurality of users captured in the video. The CPU 22 selects a monitoring target from among the specified plurality of users. Then, the CPU 22 tracks the behavior of the monitoring target in the game store 400 by analyzing the video data, and stores the tracking result as the user behavior information 30 in the memory 24. The tracking result indicates, for example, the behavior of the monitoring target from entering the store until leaving the store (staying time, in-store travel distance and travel route, time spent by sitting in front of a game machine unit, etc.). The CPU 22 stores the tracking result for each of the plurality of users as the user behavior information 30 in the memory 24.

The average data 34 includes a model average value for the game machine units of each model indicated by a plurality of model names included in the plurality of device information. The model average value indicates an average value of the operation states of two or more of the game machine units that belong to a same model (such as the model indicated by the model name "MN1") and are arranged in the game store 400. In a variant, the model average value may be an average value of operation states of a plurality of game machine units that belongs to a same model and is arranged nationwide.

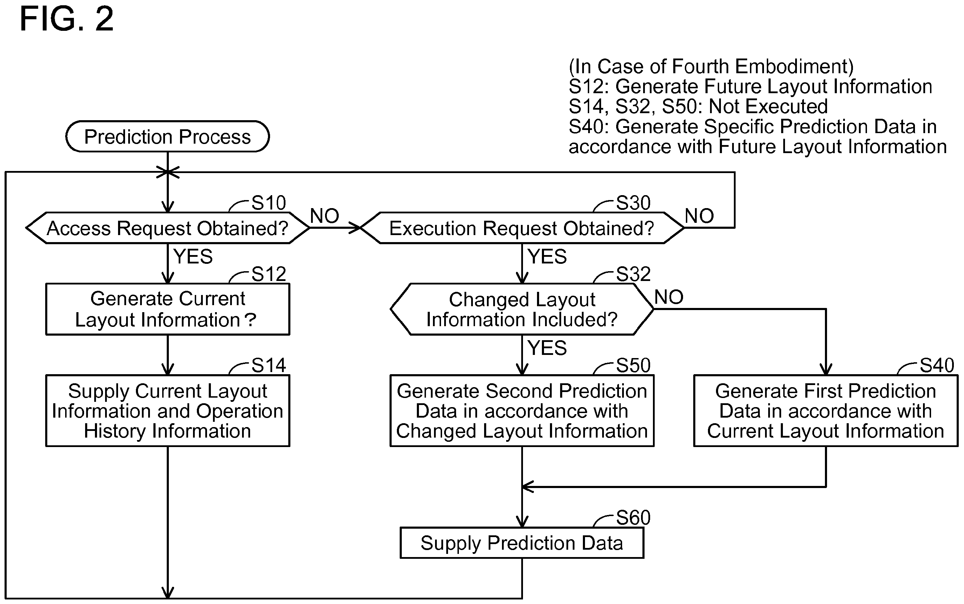

### (Prediction Process; FIG. 2)

Contents of a prediction process which the CPU 22 of the management server 10 executes according to the program 26 will be described with reference to FIG. 2. The prediction process is initiated with turn-on of the management server 10 as a trigger. In the prediction process, monitoring steps of S10 and S30 are executed.

In S10, the CPU 22 monitors whether an access request is obtained from the terminal device 200. The access request is a command for requesting access to the management server 10. When an operator of the terminal device 200 (that is, the administrator of the game store 400) inputs a predetermined access operation to the operation unit of the terminal device 200, the terminal device 200 supplies the access request to the management server 10. When obtaining the access request from the terminal device 200, the CPU 22 determines YES in S10 and proceeds to S12.

In S12, the CPU 22 generates current layout information. Specifically, in S12, the CPU 22 refers to the plurality of device information (such as DI1 to DI4 of FIG. 1) in the memory 24 and specifies the machine numbers (such as "001"), the model names (such as "MN1"), and the current position information (such as CP1) included in the respective device information. Then, the CPU 22 generates the current layout information by using the specified machine numbers, model names, and current position information. The current layout information is information in which each of the machine numbers, the model name of the corresponding game machine unit indicated by the machine number, and the current position information of the game machine unit are associated with each other. That is, the current layout information can, in other words, be termed information indicating the arranged positions where the plurality of game machine units is actually arranged in the game store 400 at present (such as the current layout L1 of FIG. 1).

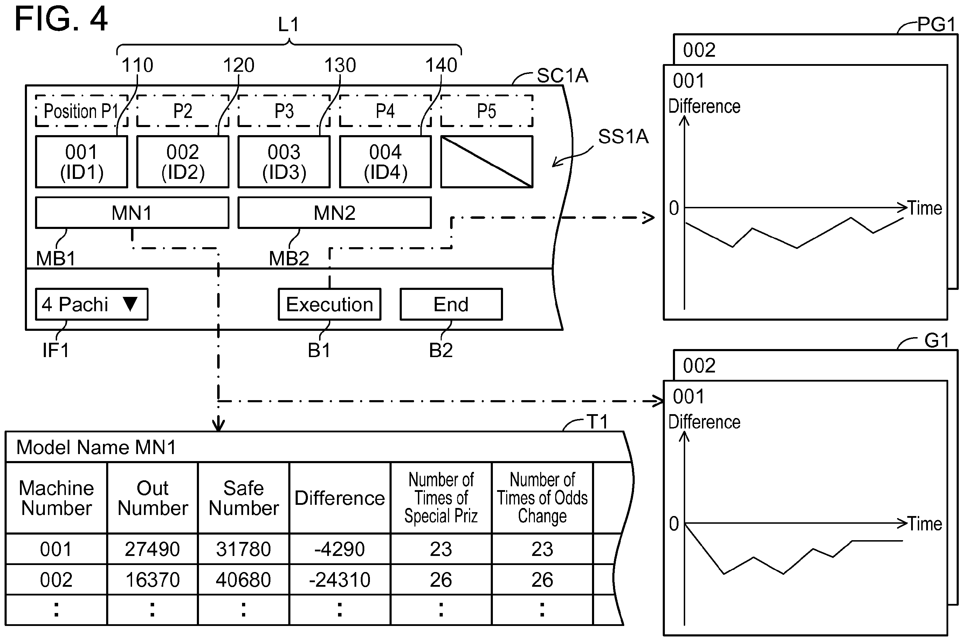

In subsequent S14, the CPU 22 specifies the operation history information (such as RH1) included in each of the plurality of device information, and supplies the specified operation history information and the current layout information generated in S12 to the terminal device 200. When obtaining the operation history information and the current layout information, the terminal device 200 displays a screen for allowing the administrator to view the obtained operation history information and current layout information (such as SC1A, T1, G1 of FIG. 4) (see FIG. 4). When S14 is completed, the CPU 22 returns to the monitoring of S10 and S30.

In S30, the CPU 22 monitors whether an execution request is obtained from the terminal device 200. The execution request is a command for requesting to generate prediction data indicating predicted values for future operation states of the respective game machine units. The administrator can input a predetermined execution operation to the operation unit while the screen for allowing the administrator to view the obtained operation history information and current layout information as aforementioned is displayed. When the execution operation is inputted, the terminal device 200 supplies the execution request to the management server 10. Further, before inputting the execution operation, the administrator can input a changing operation to change the current layout L1 indicated by the current layout information. In this case, the terminal device 200 generates changed layout information indicating a changed layout, which is a layout different from the current layout L1. Further, when the execution operation is inputted after the changing operation has been inputted, the terminal device 200 supplies the execution request including the aforementioned changed layout information to the management server 10. When obtaining the execution request, the CPU 22 determines YES in S30 and proceeds to S32.

In S32, the CPU 22 determines whether or not the execution request includes the changed layout information. The changed layout information indicates the changed layout, which is different from the current layout L1 indicated by the current layout information supplied to the terminal device 200 in S14. In a case where the execution request does not include the changed layout information, the CPU 22 determines NO in S32 and proceeds to S40. In a case where the execution request includes the changed layout information, the CPU 22 determines YES in S32 and proceeds to S50.

In S40, the CPU 22 generates first prediction data including the predicted values for the future operation states of the respective game machine units arranged in the game store 400 in accordance with the current layout (such as L1) by using the current layout information generated in S12, the respective operation history information included in the plurality of device information, the user behavior information 30, the characteristic information 32, and the average data 34 in the memory 24.

A specific example of a calculation method of the predicted values for the future operation states of the respective game machine units will be described. However, the calculation method described below is merely an example, and the CPU 22 may actually calculate the predicted values according to other arbitrary calculation method.

Firstly, the CPU 22 specifies one target game machine unit, which is a target for which an operation state is calculated, from among the plurality of game machine units. Then, the CPU 22 specifies the model of this target game machine unit (which will be termed "target model"). Next, the CPU 22 refers to the average data 34 and specifies the model average value of the target model (which will be termed "target model average value"). Here, this target model average value is assumed as X1.

Further, the CPU 22 refers to the current position information in the memory 24 and specifies the position where the target game machine unit is arranged (which will be termed "target position"). Then, the CPU 22 refers to the user behavior information 30 in the memory 24 and calculates a target behavior value that is obtained by quantifying the user's behavior at the target position according to a predetermined method. For example, the target behavior value may be a value related to a number of users that had visited the target position in a predetermined period in the past. In this case, a larger target behavior value indicates that a larger number of users visit the target position, meaning that a usage frequency of the target game machine unit is high. Here, this target behavior value is assumed as X2.

Further, the CPU 22 refers to the characteristic information 32 in the memory 24 and calculates a target characteristic value that is obtained by quantifying characteristics of the target position (that is, in addition to the external characteristics of the game store 400, characteristics of the target position within the game store 400 (such as, being close to an entrance, close to a vending machine, close to a prize exchanging counter, etc.)) according to a predetermined method. For example, a larger target characteristic value means that the usage frequency of the target game machine unit is higher. Here, this target characteristic value is assumed as X3.

Further, the CPU 22 specifies the operation history information of the target game machine unit (which will be termed "target operation history information") included in the device information (such as DI1 of FIG. 1) corresponding to the target game machine unit in the memory 24. Here, this target operation history information is assumed as X4.

Then, the CPU 22 uses the aforementioned X1 to X4 to create a quantification equation for quantifying the predicted value for the operation state of the target game machine unit. Specifically, the CPU 22 creates a quantification equation of Y = aX1+bX2+cX3+dX4. Here, values of a to d are coefficients that are to be multiplied respectively by X1 to X4 for actually calculating the predicted value. The values of a to d are not determined at this point.

After this, the CPU 22 specifies another target game machine unit from among the plurality of game machine units, and creates a quantification equation for this other target game machine unit according to the aforementioned method. By repeating this, a quantification equation is created for each of the plurality of game machine units.

Then, the CPU 22 executes multiple regression analysis by using the quantification equations for the plurality of game machine units. That is, the CPU 22 calculates the coefficients a to d by solving simultaneous equations by using the plurality of quantification equations (such as simultaneous equations calculated by a least-squares method).

The CPU 22 substitutes the calculated coefficients a to d in each of the plurality of quantification equations. As a result, a value of Y (that is, the predicted value) is calculated from each of the quantification equations. Due to this, the CPU 22 can obtain the first prediction data including the predicted values for the future operation states of the respective game machine units.

In S40, the first prediction data is generated by executing the aforementioned processes. As above, the first prediction data includes the predicted values of the game machine units that are arranged respectively at the plurality of positions in the game store 400 in accordance with the current layout.

In S60, the CPU 22 supplies the first prediction data to the terminal device 200. When S60 is completed, the CPU 22 returns to the monitoring of S10 and S30.

In S50, the CPU 22 generates second prediction data including predicted values for the future operation states of the game machine units arranged in the game store 400 according to the changed layout by using the changed layout information, the respective operation history information in the plurality of device information, the user behavior information 30, the characteristic information 32, and the average data 34 in the memory 24. Processes for generating the second prediction data are similar to S40 except that positions indicated by the changed layout information are used upon specifying the target position where the target game machine unit is arranged.

In a case where the changed layout includes a new game machine unit that is not actually arranged in the game store, the CPU 22 creates a quantification equation for this new game machine unit as well according to a substantially similar method as above. In so doing, the model average value of the same model may be used as operation history information of the new game machine unit. Further, in a case where the model of this new game machine unit is a new model (that is, a model that is not at all arranged in the game store 400 at present), a model average value which a vendor of the game machine unit provides in advance may be used as the operation history information of the new game machine unit. When S50 is completed, the CPU 22 proceeds to S60.

Due to this, for example, in a case where the arranged position of the game machine unit 110 arranged at the position P1 in the current layout L1 is changed to the position P4 in the changed layout, the predicted value is calculated by using the target characteristic value and the target behavior value corresponding to the position P4. That is, the predicted value for the case where the game machine unit 110 is arranged at the position P4 is calculated. Further, for example, in a case where a new game machine unit is to be arranged in the changed layout when no game machine unit is arranged at the position P4 in the current layout L1 and the new game machine unit is of a new model, the predicted value is calculated by using the target characteristic value and the target behavior value corresponding to the position P4 and the model average value of that model which the vendor provides in advance. That is, the predicted value for the case where the new game machine unit is newly arranged at the position P4 is calculated.

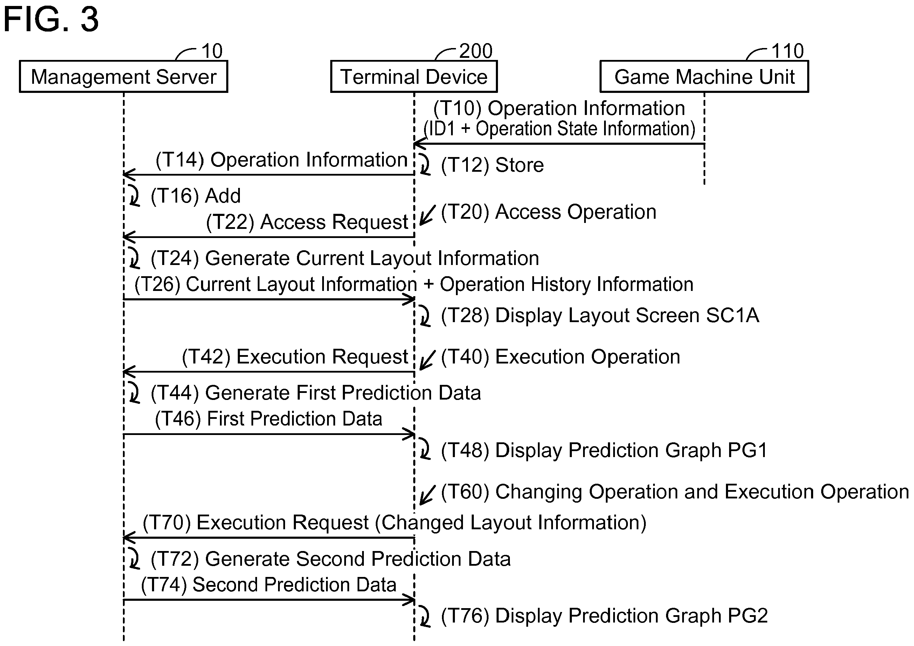

### (Specific Case in First Embodiment; FIG. 3)

A specific case realized by the process of FIG. 2 will be described with reference to FIG. 3. In T10, the terminal device 200 obtains the operation information including the identification information "ID1" and the operation state information from the game machine unit 110 arranged in the game store 400 every predetermined time. In T12, the terminal device 200 stores the obtained operation information in the memory. Although not shown, the terminal device 200 also obtains the operation information from each of the game machine units 120 to 140 every predetermined period, and stores the obtained operation information in the memory.

In T14, the management server 10 obtains from the terminal device 200 the operation information of each game machine unit stored in the memory of the terminal device 200 every predetermined period. In T16, the management server 10 adds the operation state information included in the obtained operation information to the operation history information RH1 in the device information DI1 that includes the identification information "ID1" included in the obtained operation information.

In the case where the terminal device 200 accepts the access operation (T20), the management server 10 obtains the access request from the terminal device 200 in T22 (YES in S10 of FIG. 2). The management server 10 generates the current layout information in T24 (S12), and supplies to the terminal device 200 the generated current layout information and the plurality of operation history information respectively in the plurality of device information in T26 (S14).

In T28, the terminal device 200 causes the display unit to display a layout screen SC1A (see FIG. 4) in accordance with the obtained current layout information. As shown in FIG. 4, the layout screen SC1A includes a schematic layout screen SS1A, an input box IF1, an Execution button B1, and an End button B2. The schematic layout screen SS1A is a screen for schematically displaying the plurality of game machine units arranged in accordance with the current layout L1. Each of the game machine units is represented by a machine box indicated by its machine number. For example, a machine box allocated with the machine number "001" indicating the game machine unit 110 is arranged at a portion indicating the position P1 in the game store 400 in the schematic layout screen SS1A. Further, a machine box not allocated with any machine number is arranged at a portion indicating a position P5 in the game store 400 in the schematic layout screen SS1A. This means that no game machine unit is arranged at the position P5 at present. The schematic layout screen SS1A does not display the reference signs P1 to P5 actually. In FIG. 4, to express the fact that the reference signs P1 to P5 are not displayed actually, each of the positions P1 to P5 is surrounded with a hypothetical line.

Further, in the schematic layout screen SS1A, model boxes MB1, MB2 are arranged under the machine boxes. The model box MB1 is for indicating the model name "MN1". The model names of the game machine units 110, 120 are both "MN1". The model box MB1 is arranged over two machine boxes respectively indicating the game machine units 110, 120. Similarly, the model box MB2 for indicating the model name "MN2" is arranged over two machine boxes respectively indicating the game machine units 130, 140.

The input box IF1 is a button for changing displayed contents of the schematic layout screen SS1A. For example, in a case where "4 pachi", which indicates a so-called 4-yen pachinko, is inputted to the input box IF1, only the machine boxes indicating the game machine units corresponding to the 4 pachi are displayed on the schematic layout screen SS1A. The administrator may change the displayed contents of the schematic layout screen SS1A by operating the input box IF1 to select "1 pachi" indicating a so-called 1-yen pachinko, "20 slot" indicating a so-called 20-yen slot, and the like other than the "4 pachi". The Execution button B1 is a button for supplying the execution request to the management server (S30 of FIG. 2). The End button B2 is a button for discarding the obtained current layout information and plurality of operation history information and terminating display of the layout screen SC1A.

In a case where the model box MB1 is selected by the administrator while the layout screen SC1A is displayed, the terminal device 200 causes the display unit to display an operation state table T1 and an operation state graph G1. The operation state table T1 is a table for displaying the operation states of the game machine units having the model name "MN1" indicated by the model box MB1 (such as the game machine units 110, 120). The operation state table T1 displays latest operation states in the operation history information. The operation state table T1 includes a column for "difference". The "difference" is a value that is obtained by subtracting the safe number from the out number. The operation state graph G1 is a graph for displaying the operation states of the game machine units having the model name "MN1". In the operation state graph G1, a horizontal axis indicates time and a vertical axis indicates the difference. The operation state graph G1 includes a graph corresponding to the game machine unit 110 (a graph with "001" indicated in the depiction) and a graph corresponding to the game machine unit 120 (a graph with "002" indicated in the depiction). The terminal device 200 may display a graph in which the vertical axis indicates another operation state (such as the out number) but the difference. Further, in a case where the model box MB2 is selected, the terminal device 200 causes the display unit to display a table and a graph for displaying the operation states of the game machine units having the model name "MN2" indicated by the model box MB2. Hereinbelow, the explanation will be continued for the case where the model box MB1 is selected.

The explanation will be continued by returning to FIG. 3. In the case where the terminal device 200 accepts the execution operation of selecting the Execution button B1 (T40), the management server 10 obtains the execution request from the terminal device 200 in T42 (YES in S30 of FIG. 2). At a time point when the process of T40 is executed, the terminal device 200 has not yet accepted the changing operation. That is, at this time point, the changed layout information is not generated.

In T44, since the execution request in T42 does not include the changed layout information (NO in S32), the management server 10 generates the first prediction data indicating the future operation states of the plurality of game machine units arranged in the game store 400 according to the current layout (S40), and supplies the first prediction data to the terminal device 200 in T46 (S60).

In T48, in accordance with the first prediction data, the terminal device 200 displays a prediction graph PG1 (see FIG. 4) indicating the future operation states of the game machine units having the model name "MN1" indicated by the selected model box MB1. In the prediction graph PG1, a horizontal axis indicates a future time and a vertical axis indicates the difference calculated from the future operation state. The prediction graph PG1 also includes a graph corresponding to the game machine unit 110 (a graph with "001" indicated in the depiction) and a graph corresponding to the game machine unit 120 (a graph with "002" indicated in the depiction). Due to this, the administrator can acknowledge the future operation states of the respective game machine units in a case of maintaining the layout of the plurality of game machine units arranged in the game store 400 as in the current layout.

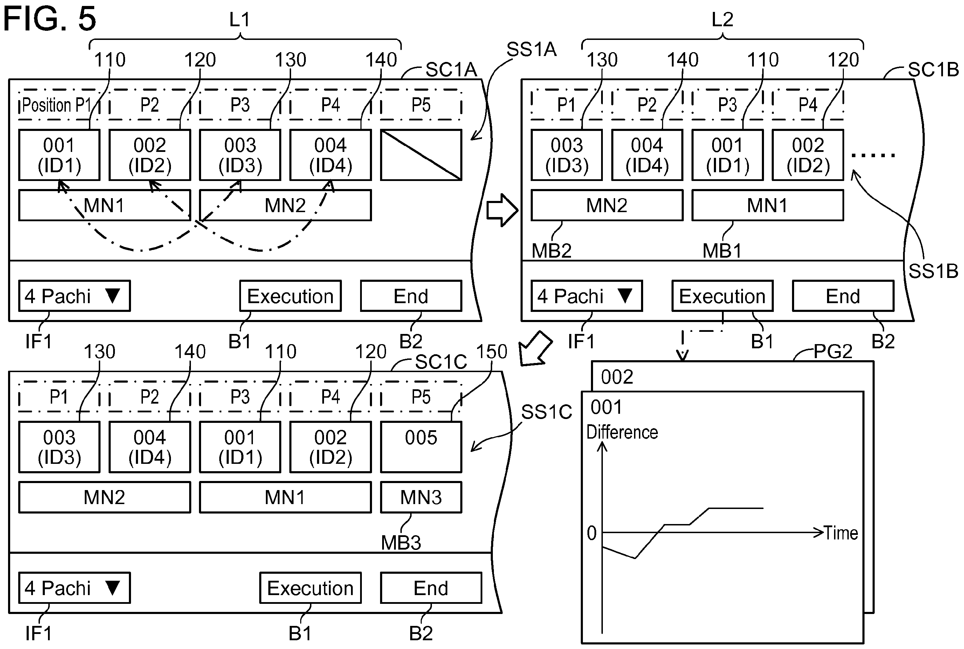

In T60, the terminal device 200 accepts the changing operation for changing the current layout L1 included in the schematic layout screen SS1A that is displayed at present. When accepting the changing operation, the terminal device 200 generates the changed layout information. Specifically, as shown in FIG. 5, the administrator performs an operation to swap the machine box indicating the game machine unit 110 for the machine box indicating the game machine unit 130 in the schematic layout screen SS1A. This swapping operation may, for example, be click and drop. By doing so, the machine box indicating the game machine unit 110 is arranged at a portion indicating the position P3, and the machine box indicating the game machine unit 130 is arranged at the portion indicating the position P1. Further, the administrator performs an operation to swap the machine box indicating the game machine unit 120 for the machine box indicating the game machine unit 140 in the schematic layout screen SS1A. By doing so, the machine box indicating the game machine unit 120 is arranged at a portion indicating the position P4, and the machine box indicating the game machine unit 140 is arranged at a portion indicating the position P2.

Then, the terminal device 200 generates changed layout information representing a changed layout L2 that is displayed on a layout screen SC1B after the aforementioned changing operation has been performed. In the changed layout information, the positions P1 to P4 are respectively associated with the machine numbers "003", "004", "001", and "002". That is, the changed layout L2 represented by the changed layout information differs from the current layout L1.

In T70 of FIG. 3, the management server 10 obtains the execution request including the changed layout information from the terminal device 200 (YES in S30) in a case where an Execution button B1 in the layout screen SC1B is selected in the terminal device 200. In T72, since the execution request includes the changed layout information (YES in S32), the management server 10 generates the second prediction data indicating the future operation states of the plurality of game machine units arranged in the game store 400 according to the changed layout (S50), and supplies the second prediction data to the terminal device 200 in T74 (S60).

In T76, in accordance with the second prediction data, the terminal device 200 displays a prediction graph PG2 showing the future operation states of the game machine units with the model name "MN1" indicated by the selected model box MB1. In the prediction graph PG2, a horizontal axis indicates future time and a vertical axis indicates the difference calculated from the future operation state. In the changed layout L2, the game machine unit 110 with the model name "MN1" is arranged at the position P3 which is different from the position P1 where it is arranged in accordance with the current layout L1. The prediction graph PG2 shows the future operation state of the game machine unit 110 arranged at the position P3. Due to this, the administrator can acknowledge the future operation states of the game machine units of which positions are to be changed.

Further, the terminal device 200 accepts an operation to input a new machine number indicating a new game machine unit to a machine box that is displayed in a schematic layout screen SS1B of the layout screen SC1B and is not allocated with any machine number. Specifically, as shown in FIG. 5, the administrator performs an operation to input a new machine number "005" to the machine box at the position P5. In a case where the operation to input the new machine number is performed, the terminal device 200 displays an input screen (not shown) for inputting a model name. The administrator can further input a model name "MN3" in the input screen. When the model name "MN3" is inputted to the input screen, the terminal device 200 causes the display unit to display a layout screen SC1C including a schematic layout screen SS1C, and generates new changed layout information by associating the position P5, the machine number "005", and the model name "MN3" with each other.

By executing processes similar to T70 to T74, the management server 10 supplies the terminal device 200 with second prediction data including predicted values for the future operation states of a plurality of game machine units that is arranged in accordance with the new changed layout information and includes the new game machine unit.

In a case where a model box MB3 indicating the model name "MN3" in the layout screen SC1C in selected, the terminal device 200 displays a prediction graph (not shown) showing a future operation state of a new game machine unit 150 indicated by the machine number "005". Due to this, the administrator can acknowledge the future operation state of the new game machine unit.

### (Effects of Embodiment)

The management server 10 generates the first prediction data including the predicted values for the respective future operation states of the plurality of game machine units arranged in accordance with the current layout (T44). Then, the terminal device 200 displays the prediction graph PG1 in accordance with the first prediction data (T48). Further, the management server 10 generates the second prediction data including the predicted values for the respective future operation states of the plurality of game machine units arranged in accordance with the changed layout (T72). Then, the terminal device 200 displays the prediction graph PG2 in accordance with the second prediction data (T76). The administrator of the game store 400 can acknowledge the predicted values for the future operation states in the current layout L1 by seeing the prediction graph PG1, and can acknowledge the predicted values for the future operation states in the changed layout L2 by seeing the prediction graph PG2. Due to this, the administrator of the game store 400 can select an optimal layout from the current layout L1 and the changed layout L2 by comparing the prediction graph PG1 and the prediction graph PG2. That is, administrator's determination on the layout can be assisted.

Further, in the case of generating the first and second prediction data, the management server 10 calculates the predicted values by using the target behavior values obtained by using the user behavior information 30 (S40, S50). Due to this, the predicted values can be calculated by taking the behaviors of the users in the game store 400 into account, by which accuracy of the predicted values can be improved. Moreover, the management server 10 further calculates the predicted values by using the target characteristic values obtained by using the characteristic information 32 (S40, S50). Due to this, the predicted values can be calculated by taking the environmental characteristics of the game store 400 into account, by which the accuracy of the predicted values can be improved. Moreover, the management server 10 further calculates the predicted values by using the average data 34 (S40, S50). Due to this, the model equations that each represent the future operation state of the game machine unit of the target model in the game store 400 can be calculated by taking the target model average value into account, by which the accuracy of the predicted values calculated by using the model equations can be improved.

### (Corresponding Relationships)

The game store 400 is an example of "target area". The management server 10 and the game machine units 110 to 140 are respectively examples of "server" and "one or more devices". The memory 24 is an example of "storage device". The current layout and the changed layout are respectively examples of "first layout" and "second layout". The operation history information RH1 is an example of "stored operation information".

### (Second Embodiment)

In this embodiment, each of the device information includes position history information instead of the current position information. For example, the device information DI1 of FIG. 1 includes position history information PH1 instead of the current position information CP1. The position history information PH1 indicates a history of positions where the game machine unit 110 has been arranged in the game store 400 from the past until present. That is, the position history information PH1 is a database of the position information of the game machine unit 110 indicated by the identification information "ID1".

Processes that are executed in the terminal device 200 and the management server 10 before the position history information is stored in the memory 24 of the management server 10 will be described. Firstly, in a case of changing a position of a game machine unit in the game store 400, the administrator operates the operation unit of the terminal device 200 to input identification information indicating the game machine unit whose position is to be changed and position information indicating a new arranged position thereof. In this case, the CPU of the terminal device 200 causes the memory of the terminal device 200 to store the position information indicating the new arranged position and input time information indicating a time when the position information was inputted in association with the machine information including the inputted identification information. That is, the time indicated by the input time information indicates a starting point of a period during which the changing target game machine unit is arranged at the newly arranged position. Due to this, the CPU causes the memory to store, in association with the machine information, the position history information which indicates the history of the positions where the game machine unit indicated by the machine information has been arranged from the past to present. Then, the CPU supplies combinations of the machine information and the position history information stored in the memory to the management server 10 every predetermined timing.

Here, the explanation will be continued by focusing on the position history information PH1 of the device information DI1. When obtaining the combinations of the machine information and the position history information from the terminal device 200, the CPU 22 of the management server 10 specifies the combination including the identification information "ID1" from among the obtained combinations and further specifies the device information DI1 associated with the identification information "ID1". In a case where the position history information PH1 included in the device information DI1 stored in the memory 24 differs from the position history information included in the specified combination, the CPU 22 newly causes the position history information included in the specified combination to be stored (that is, updates) as the position history information PH1.

In the first embodiment, the operation history information RH1 simply needs to include the operation state information indicating the operation state of the game machine unit 110 at the position where it is currently arranged. Contrary to this, in the present embodiment, the operation history information RH1 includes the operation state information at all of the arranged positions from the past to present. For example, in a case where the game machine unit 110 was arranged at the position P3 before it is arranged at the position P1, the operation history information RH1 includes the operation state information indicating the operation state of the game machine unit 110 at the position P3 in the past, and the operation state information indicating the operation state of the game machine unit 110 at the position P1 at present.

### (Prediction Process; FIG. 2)

In the present embodiment, processes similar to those of the first embodiment are executed except for that contents of the processes of S12, S40, and S50 are different from those of the first embodiment.

In S12, the CPU 22 specifies the position history information from each of the plurality of device information, and specifies the position of each game machine unit as of a latest date and time by using the specified position history information. Then, the CPU 22 uses the specified positions to generate the current layout information similarly to the first embodiment.

In S40, the CPU 22 generates the first prediction data by using the respective position history information of the plurality of device information in the memory 24 in addition to the information used in the first embodiment.

Specifically, the CPU 22 calculates the target model average values, the target behavior values, and the target characteristic values (that is, X1 to X3 as above) similarly to the first embodiment. Then, in the present embodiment, the CPU 22 specifies current history information and past history information, instead of the target operation history information of the first embodiment. The current history information indicates the history of the operation states at the position where each game machine unit is currently arranged, and the past history information indicates the history of the operation states at the position where each game machine unit was arranged in the past.

For example, in the case where the game machine unit 110 was arranged at the position P3 before it is arranged at the position P1, the CPU 22 specifies the input time information indicating the time when the position information indicating the position P1 was inputted (that is, the information indicating the starting point of the period during which the game machine unit 110 is arranged at the position P1) from the position history information. Then, the CPU 22 specifies the operation state information of time prior to the time indicated by the specified input time information as the past history information indicating the history of the operation states at the position P3. The CPU 22 specifies the operation state information of time after the time indicated by the specified input time information as the current history information of the operation states at the position P1. In a case where the game machine unit 110 was arranged at two or more positions before it is arranged at the position P1, the CPU 22 specifies the past history information for each of the two or more positions.

Here, this current history information is assumed as X4A, and the past history information is assumed as X4B, X4C, and so forth .

Then, the CPU 22 uses the aforementioned X1 to X4A, X4B, and so forth to create a quantification equation for quantifying the predicted value for the operation state of this target game machine unit (that is, Y = aX1+bX2+cX3+dX4A+eX4B, ...). Here, values of a to e are coefficients that are to be multiplied respectively by X1 to X4A for actually calculating the predicted value. The values of a to e are not determined at this point.

After this, the CPU 22 creates a quantification equation for each of the plurality of game machine units according to the similar method, and calculates each of the coefficients a to e and the like by executing the multiple regression analysis using the equations. Then, the CPU 22 substitutes the calculated coefficients a to e in each of the plurality of quantification equations. As a result, a value of Y (that is, the predicted value) is calculated from each of the quantification equations. Due to this, the CPU 22 can obtain the first prediction data including the predicted values for the future operation states of the game machine units.

Further, in S50, upon specifying the target position where the target game machine unit is arranged, the CPU 22 calculates the second prediction data according to the method similar to that of S40 except for that the positions indicated by the changed layout information are used.

### (Effects of Embodiment)

In the present embodiment, the first and second prediction data are generated by using the past history information, which is obtained by using the position history information and the operation history information, in addition to the information used in the first embodiment. Due to this, the accuracy of the first and second prediction data can be improved.

### (Third Embodiment)

The technique of the first embodiment can be applied to prediction of future sales of stores that are arranged in a predetermined community according to a predetermined layout.

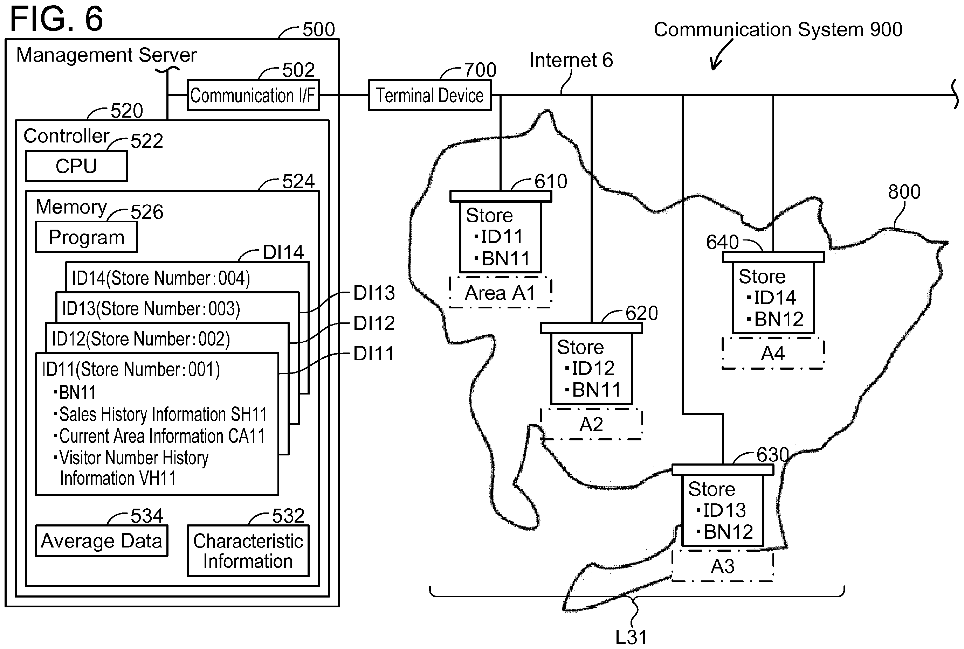

A communication system 900 shown in FIG. 6 is a system for providing a service to predict a sales status of each store arranged in a predetermined community. As shown in FIG. 6, the communication system 900 is provided with a management server 500, a terminal device 700, and a plurality of stores (such as restaurants) 610 to 640. The stores 610 to 640 are arranged in a community 800 (such as a particular province). The terminal device 700 is arranged at a location accessible by an administrator (that is, a franchiser) who manages the stores 610 to 640 (such as at a workplace of the administrator). The terminal device 700 is capable of communicating with the management server 500 through the Internet 6. Each store is provided with a management terminal (not shown) for managing sales of that store. Each of the management terminals is capable of communicating with the terminal device 700 through the Internet 6. Hereinbelow, "the in-store management terminal supplying information to the terminal device 700" will be expressed as "the store supplying the information to the terminal device 700".

### (Configurations of Stores 610 to 640)

The stores 610 to 640 are arranged in one community 800 in accordance with a current layout L31. The current layout L31 indicates arranged areas where the plurality of stores including the stores 610 to 640 are actually arranged in the community 800. The current layout L31 defines, for each of the plurality of stores in the community 800, an area within the community 800 where the store is arranged (that is, a plurality of areas including areas A1 to A4). In an example of FIG. 6, the stores 610 to 640 are currently arranged respectively in the areas A1 to A4. For example, the areas A1 to A4 respectively indicate four different municipalities in the community 800.

The stores 610 to 640 are respectively allocated with identification information "ID11" to "ID14" (for example, manufacturing serial numbers of the in-store management terminals). Further, the stores 610, 620 are same franchise stores (that is, stores with a same brand name), and the brand name is BN11. Similarly, the stores 630, 640 are also same franchise stores, and their brand name is BN12.

The store 610 generates sales information related to its sales status every day and supplies the same to the terminal device 700. The sales information includes the identification information "ID11", sales status information indicating its sales status, and a number of visitors. The number of visitors indicates a number of customers that had visited the store 610 in one day. Other stores 620 to 640 similarly generate their sales information every day and supply the same to the terminal device 700.

### (Configuration of Terminal Device 700)

The terminal device 700 is a computer installed by the administrator (that is, the franchiser) and is a device for managing the plurality of stores in the community 800. The terminal device 700 is provided with a display unit, an operation unit, and a controller that are not shown, similarly to the terminal device 200 of the first embodiment. A memory of the controller stores the sales information obtained from each of the plurality of stores in the community 800. The terminal device 700 supplies the sales information in the memory to the management server 500 every day.

Further, when a store is to be newly arranged in the community 800, the administrator operates the operation unit to input various types of information indicating characteristics of this store (identification information of the store, a brand name of the store, a store number of the store, etc.) to the terminal device 700, in order to register the various types of information related to this store in the terminal device 700. Here, the store number is a number which the administrator allocates uniquely for identifying each store in the community 800. For example, in the example of FIG. 6, the store 610 (the identification information "ID11", the brand name "BN11") is allocated with a store number "001". The inputted various types of information (will be hereinbelow termed "store information") is stored in the memory of the terminal device 700. In a case where there are plural stores to be newly arranged in the community 800, the administrator performs the input of store information similarly for each of the plural stores. As a result, the memory of the terminal device 700 stores the store information corresponding respectively to the stores 610 to 640 that are currently arranged in the community 800.

Further, the administrator inputs to the terminal device 700, for each of the stores indicated respectively by the store information, current area information indicating the area within the community 800 (such as A1 in FIG. 6) where the store is arranged, by operating the operation unit similarly to the first embodiment. Each of the inputted current area information is stored in the memory in association with the store information indicating the corresponding store.

Further, a CPU of the terminal device 700 supplies combinations of the store information and the current area information stored in the memory to the management server 500 every predetermined timing.

Further, the administrator inputs characteristic information of the community 800 to the terminal device 700 in advance by operating the operation unit of the terminal device 700. The characteristic information is information related to environmental characteristics in the plurality of areas in the community 800. Each of the environmental characteristics includes a population and a population composition in its corresponding area, and information related to facilities in the area (such as station, presence or absence of competitor's stores, a number thereof, and distances thereof from the store, etc.). The inputted characteristic information is stored in the memory of the terminal device 700. Then, the CPU of the terminal device 700 supplies the characteristic information in the memory to the management server 500 in advance. When the administrator updates contents of the characteristic information as well, the CPU supplies the updated characteristic information in the memory to the management server 500.

### (Configuration of Management Server 500)

The management server 500 is a server provided by a service provider that provides the service to predict the future sales status of each store by using the communication system 900. The management server 500 is provided with a communication I/F 502 and a controller 520. The controller 520 is provided with a CPU 522 and a memory 524. The memory 524 stores a program 526, device information DI11 to DI14, characteristic information 532, and average data 534. Configurations of the communication I/F 502 and the controller 520 are basically similar to the configurations of the communication I/F 12 and the controller 20 of the management server 10 according to the first embodiment. However, in this embodiment, contents of the plurality of device information DI11 to DI14, contents of the characteristic information 532, and contents of the average data 534 differ from those of the first embodiment. The characteristic information 532 is the characteristic information obtained from the terminal device 700. The average data 534 includes a brand average value for each of the brands of stores indicated by the plurality of brand names included in the plurality of device information. The brand average value represents an average of sales statuses of two or more of the stores that belong to a same brand (such as the brand indicated by the brand name BN11) and are arranged in the community 800.

The device information DI11 includes the identification information "ID11", the store number "001", the brand name "BN11", sales history information SH11 indicating a history of the sales status information, current area information CA11 indicating the area where the store 610 is currently arranged, and visitor number history information VH11 indicating a history of the number of visitors to the store 610. That is, the sales history information SH11 is a database of the sales status information of the store 610 indicated by the identification information "ID11", similarly to the operation history information RH1 (see FIG. 1) according to the first embodiment. The current area information CA11 indicates the area where the store 610 is currently arranged in the community 800. The visitor number history information VH11 indicates the history of the number of visitors to the store 610. That is, the visitor number history information VH11 is a database of the number of visitors to the store 610.

In the present embodiment as well, the CPU 522 of the management server 500 causes the memory 524 to store the device information DI11 to DI14 based on the combinations of the store information and current position information and based on the sales information of the respective stores that are obtained from the terminal device 700. A method for the CPU 522 to obtain the combinations of the store information and current position information from the terminal device 700, a method for the CPU 522 to obtain the sales information of the respective stores from the terminal device 700, and a method for the CPU 522 to cause the memory 524 to store the device information DI11 to DI14 based on such information are similar to the methods for the CPU 22 of the management server 10 according to the first embodiment to cause the memory 24 to store the device information DI1 to DI4, thus detailed description thereof will be omitted.

### (Prediction Process; FIG. 2)

In this embodiment as well, the CPU 522 executes the prediction process of FIG. 2. Contents of the prediction process of the present embodiment are basically similar to those of the first embodiment, however, contents of processes in S40 and S50 differ from those of the first embodiment.

In S40, the CPU 522 generates first prediction data including predicted values for the future sales statuses of the respective stores arranged in the community 800 in accordance with a current layout (such as L31).

A specific example of a calculation method for the predicted value of the future sales status of each store according to the present embodiment will be described. However, the calculation method described below is merely an example, and the CPU 522 may calculate the predicted values according to other arbitrary methods.

The CPU 522 specifies one target store, which is a target for which a sales state is calculated, from among the plurality of stores. Then, the CPU 522 specifies a brand of the target store (which will be termed "target brand"). Next, the CPU 522 refers to the average data 534 to specify a brand average value of the target brand (which will be termed "target brand average value"). Here, this target brand average value is assumed as X1.

Further, the CPU 522 refers to the current area information in the memory 524 to specify an area where the target store is arranged (which will be termed "target area"). Then, the CPU 522 refers to the visitor number history information VH11 of the target store in the memory 524 to calculate a target behavior value that is obtained by quantifying behavior of one or more visitors to the target store according to a predetermined method. Here, this target behavior value is assumed as X2.

Further, the CPU 522 refers to the characteristic information 532 in the memory 524 to calculate a target characteristic value that is obtained by quantifying characteristics of the target area according to a predetermined method. Here, this target characteristic value is assumed as X3.

Moreover, the CPU 522 specifies sales history information of the target store (which will be termed "target sales history information") included in the device information corresponding to the target store in the memory 524 (such as DI11 of FIG. 6). Here, this target sales history information is assumed as X4.

Then, the CPU 522 uses the aforementioned X1 to X4 to create a quantification equation for quantifying the predicted value for the sales status of the target store, similarly to the first embodiment. Specifically, the CPU 522 creates a quantification equation of Y = aX1+bX2+cX3+dX4.

After this, the CPU 522 specifies another target store from among the plurality of stores, and creates a quantification equation for this other target store according to the aforementioned method. By repeating this, quantification equations are created respectively for the plurality of stores.

Then, the CPU 522 executes the multiple regression analysis by using the quantification equations respectively for the plurality of stores. That is, the CPU 522 calculates coefficients of a to d by solving simultaneous equations using the plurality of quantification equations (such as the simultaneous equations calculated by the least-squares method).

The CPU 522 substitutes the calculated coefficients a to d in each of the plurality of quantification equations. As a result, a value of Y (that is, the predicted value) is calculated from each of the quantification equations. Due to this, the CPU 522 can obtain the first prediction data including the predicted values for the future sales statuses of the respective stores.

Further, in S50, the CPU 522 generates second prediction data including predicted values for the future sales statuses of the respective stores arranged in the community 800 according to a changed layout by using changed layout information, the sales history information and the visitor number history information of the plurality of device information, the characteristic information 532, and the average data 534 in the memory 24. Processes for generating the second prediction data are similar to S40 except that areas indicated by the changed layout information are used upon specifying the target area where the target store is arranged.

In the present embodiment as well, similarly to the first embodiment, the administrator of the community 800 (that is, the franchiser) can compare a prediction graph displayed on the terminal device 700 according to the first prediction data with a prediction graph displayed on the terminal device 700 according to the second prediction data, and can select an optimal layout from the current layout and the changed layout. The community 800 and the stores 610 to 640 are respectively examples of "target area", and "one or more devices". The sales history information SH11 is an example of "stored operation information".

### (Fourth Embodiment)

This embodiment is a variant of the first embodiment. In the present embodiment, the management server 10 calculates predicted values indicating operation states of game machine units that are to be arranged in the future in the game store 400 in which no game machine unit is arranged yet (that is, the game store 400 that is to start its operation).

### (Configuration of Communication System; FIG. 1)

In the present embodiment, the game store 400 has not yet started its operation, and thus the game machine units 110 to 140 have not yet been arranged in the game store 400. Further, the video camera 300 has not yet started image-capturing actual users. Due to this, in this embodiment, the terminal device 200 does not obtain operation information from any game machine units and does not obtain image data from the video camera. Due to this, in this embodiment, each of the device information DI1 to DI4 in the memory 24 does not include the operation history information. Further, the user behavior information 30 and the average data 34 are not stored in the memory 24, either.

In this embodiment, an administrator of the game store 400 inputs machine information (that is, identification information, a model name, a machine number, etc.) related to each of game machine units that are to be arranged in the game store 400 in the future to the terminal device 200 in advance. Further, for each of the game machine units indicated by the machine information, the administrator inputs current position information indicating a position where the game machine unit is to be arranged in the game store 400. The terminal device 200 supplies combinations of the machine information and current position information in the memory to the management server 10 every predetermined timing, similarly to the first embodiment.

Further, the administrator also inputs characteristic information of the game store 400 to the terminal device 200 in advance. The terminal device 200 supplies the inputted characteristic information to the management server 10.

Due to this, as aforementioned, the device information corresponding to the respective game machine units to be arranged in the game store 400 and the characteristic information of the game store 400 are stored in the memory 24 of the present embodiment as well.

### (Prediction Process; FIG. 2)

In the present embodiment, contents of the prediction process which the CPU 22 executes are basically in common with those of the first embodiment, however, contents of processes in S12 and S40 differ from those of the first embodiment. Further, the present embodiment further differs from the first embodiment in that processes in S14, S32, and S50 are not executed.

In S12, future layout information indicating a future layout for the plurality of game machine units in the game store 400 (that is, a layout for the plurality of game machine units which the administrator plans to arrange) is generated. A method of generating the future layout information is basically similar to the method of generating the current layout information in the first embodiment, thus a detailed description thereof will be omitted. The present embodiment differs from the first embodiment in that the future layout information is generated in accordance with the current position information indicating the positions where the respective game machine units are to be arranged.

In S40, the CPU 22 generates specific prediction data that includes predicted values for the future operation states of the respective game machine units to be arranged in the game store 400 in accordance with the future layout indicated by the future layout information generated in S12. Specifically, in S40, the CPU 22 generates the specific prediction data by using the future layout information generated in S12, operation related information, and the characteristic information 32. Here, the operation related information is information indicating operation information of game machine units of the same model that are operating in another store. The operation related information is provided by the vendor in advance. Further, the operation related information includes environmental characteristics of the other store. In a variant, the operation related information may be a model average value (such as a catalog value) provided by the vendor of the game machine units in advance. The operation related information is stored in the memory 24 in advance.

A specific calculation method for the predicted values is substantially same as the method explained in S40 of the first embodiment. However, in the present embodiment, since the average data 34 and the user behavior information 30 are not stored in the memory 24, the target model average value, etc. (the X1 and X2 as above) are not specified. Further, in this embodiment, the device information corresponding to the target game machine unit in the memory 24 does not include the target operation history information. Due to this, the CPU 22 refers to the information indicating the environmental characteristics of the other store included in the operation related information and the characteristic information 32, instead of the target operation history information, and specifies information corresponding to a game machine unit whose model is the same as the model of the target game machine unit (which will be termed "target operation related information") from among the operation related information. Then, similarly to the first embodiment, the CPU 22 executes the multiple regression analysis by using quantification equations for the respective game machine units to calculate the predicted values for the future operation states of the respective game machine units. Due to this, the CPU 22 can obtain the specific prediction data including the predicted values for the future operation states of the respective game machine units.

In the present embodiment, the management server 10 generates the specific prediction data by using the future layout information and the operation related information before the plurality of in-store game machine units is actually arranged in the game store 400. Due to this, by using the specific prediction data, the administrator can determine whether or not the plurality of devices should be arranged in the game store 400 in accordance with the future layout.

While specific examples of the present invention have been described above in detail, these examples are merely illustrative and place no limitation on the scope of the patent claims. The technology described in the patent claims also encompasses various changes and modifications to the specific examples described above. Variants of the above embodiments will be listed below.

(Variant 1) The memory 24 may not store the user behavior information 30. In this case, the CPU 22 may generate the first and second prediction data without using the target behavior values X2 (that is, the user behavior information 30). Further, the memory 24 may not store the characteristic information 32. In this case, the CPU 22 may generate the first and second prediction data without using the target characteristic values X3 (that is, the characteristic information 32). Further, the memory 24 may not store the average data 34. In this case, the CPU 22 may generate the first and second prediction data without using the target model average values X1 (that is, the average data 34).

(Variant 2) The communication system 2 may not be provided with the video camera 300. In this case, sensors (cameras, infrared sensors, etc.) provided on the game machine units may monitor the behaviors of the users using the game machine units. The terminal device 200 may obtain operation information that include result information indicating monitoring results by these sensors from the respective game machine units. The management server 10 may obtain the operation information including the result information from the terminal device 200, and may store the result information as the user behavior information 30 in the memory 24.

(Variant 3) In the first embodiment, "target area" is not limited to the game store 400. For example, it may be a store such as a launderette, or an amusement arcade. Further, "device" may be a laundry machine or an amusement machine. Further, in the third embodiment, "device" is not limited to "store". For example, it may be a vending machine, a cell phone vending machine that automatically sells cell phones and accepts repair thereof, or an automatic teller machine.

(Variant 4) In S30 of FIG. 2, the CPU 22 may obtain an execution request that includes instruction information indicating an instruction to change the current layout indicated by the current layout information. In this variant, for example, when accepting the operation to swap the machine box indicating the game machine unit 110 for the machine box indicating the game machine unit 130 on the schematic layout screen SS1A that is currently displayed, the terminal device 200 generates instruction information indicating an instruction to change the arranged position of the game machine unit 110 from the position P1 to the position P3 and instruction information indicating an instruction to change the arranged position of the game machine unit 130 from the position P3 to the position P1. Then, the terminal device 200 supplies the execution request including these instruction information to the management server 10. The management server 10 generates the changed layout information from the current layout information generated in S12 in accordance with the instructions indicated by the instruction information included in the execution request.

(Variant 5) The plurality of device information DI1 to DI4, the user behavior information 30, the characteristic information 32, and the average data 34 may be stored in a data server that is provided separately from the management server 10. In this variant, the data server is an example of "storage device".

(Variant 6) The current position information may not be inputted to the terminal device 200 by the administrator. Instead, the current position information may be included in the operation information obtained from each of the plurality of game machine units in the game store 400. In this variant, for example, when the game machine unit 110 is arranged at the position P1 in the game store 400, the administrator inputs the current position information indicating the position P1 to the game machine unit 110. The terminal device 200 obtains the operation information including the current position information from each of the plurality of game machine units in the game store 400 through the LAN 4. Then, the terminal device 200 stores the obtained operation information in the memory, and supplies the operation information including the current position information to the management server 10 every predetermined period. Due to this, the management server 10 specifies the device information associated with the identification information included in the operation information, and stores the current position information included in the operation information as the current position information of the corresponding device information.

(Variant 7) The management server 10 and the terminal device 200 may be configured as an integrated device. The integrated device may cause a memory of the integrated device to store device information similar to the plurality of device information stored in the memory 24 of the management server 10. In this case, the integrated device may obtain the operation information from each of the plurality of game machine units in the game store 400 through the LAN 4. Then, the integrated device may specify the device information associated with the identification information included in the obtained operation information from the memory thereof, and add the operation state information and the time information included in this operation information to the operation history information of the specified device information. That is, in the communication system 2, an arbitrary configuration may be employed so long as at least one of the management server 10 and the terminal device 200 can obtain the operation information from each of the plurality of game machine units in the game store 400.

The technical elements explained in the present description or drawings provide technical utility either independently or through various combinations. The present invention is not limited to the combinations described at the time the claims are filed. Further, the purpose of the examples illustrated by the present description or drawings is to satisfy multiple objectives simultaneously, and satisfying any one of those objectives gives technical utility to the present invention.

## Claims

1. A server comprising:
an operation information obtaining unit configured to obtain operation information from each of one or more devices that are arranged in a target area in accordance with a first layout, each of the operation information including identification information for identifying its corresponding device among the one or more devices and operation state information indicating an operation state of the corresponding device;
a storage controlling unit configured to store the operation information obtained from each of the one or more devices in a storage device;
a first prediction unit configured to generate first prediction data including a predicted value for a future operation state of a target device among the one or more devices by using stored operation information stored in the storage device, the target device being arranged at a first position in the target area in accordance with the first layout;
a layout information obtaining unit configured to obtain changed layout information related to a second layout being different from the first layout, the target device being arranged at a second position in the target area in the second layout, the second position being different from the first position; and
a second prediction unit configured to generate second prediction data including a predicted value for a future operation state of the target device arranged at the second position in the target area by using the changed layout information and the stored operation information, in a case where the changed layout information is obtained.

2. The server as in claim 1, wherein
the storage device further stores position history information related to a position at which one device among the one or more devices was arranged in the target area in the past,
the first prediction unit generates the first prediction data by using the stored operation information and the position history information, and the second prediction unit generates the second prediction data by using the stored operation information, the changed layout information, and the position history information.

3. The server as in claim 1 or 2, wherein
the storage device further stores user behavior information related to behavior of a user in the target area,
the first prediction unit generates the first prediction data by using the stored operation information and the user behavior information, and the second prediction unit generates the second prediction data by using the stored operation information, the changed layout information, and the user behavior information.

4. The server as in any one of claims 1 to 3, wherein
the storage device further stores characteristic information related to an environmental characteristic of the target area,
the first prediction unit generates the first prediction data by using the stored operation information and the characteristic information, and the second prediction unit generates the second prediction data by using the stored operation information, the changed layout information, and the characteristic information.

5. The server as in any one of claims 1 to 4, wherein
the storage device further stores average data that indicates an average value of operation states of two or more devices included in a device group to which the target device belongs,
the first prediction unit generates the first prediction data by using the stored operation information and the average data, and
the second prediction unit generates the second prediction data by using the stored operation information, the changed layout information, and the average data.

6. The server as in any one of claims 1 to 5, wherein
the changed layout information indicates the second layout that is related to an arrangement of a plurality of devices including one or more new devices, the one or more new devices not being included in the one or more devices arranged in the target area.

7. The server as in any one of claims 1 to 6, wherein
the target area is one store, and
each of the one or more devices is a device arranged in the store in accordance with the first layout.

8. The server as in any one of claims 1 to 6, wherein
the target area is one community, and
each of the one or more devices is a store arranged in the community in accordance with the first layout.

9. A computer program for a server comprising a computer, the computer program causing the computer of the server to perform:
obtaining operation information from each of one or more devices that are arranged in a target area in accordance with a first layout, each of the operation information including identification information for identifying its corresponding device among the one or more devices and operation state information indicating an operation state of the corresponding device;
storing the operation information obtained from each of the one or more devices in a storage device;
generating first prediction data including a predicted value for a future operation state of a target device among the one or more devices by using stored operation information stored in the storage device, the target device being arranged at a first position in the target area in accordance with the first layout;
obtaining changed layout information related to a second layout being different from the first layout, the target device being arranged at a second position in the target area in the second layout, the second position being different from the first position; and
generating second prediction data including a predicted value for a future operation state of the target device arranged at the second position in the target area by using the changed layout information and the stored operation information, in a case where the changed layout information is obtained.

10. A server comprising:
a future layout information obtaining unit configured to obtain future layout information related to a future layout for arranging one or more devices in a target area, a target device among the one or more devices being arranged at a specific position in the target area in the future layout; and
a prediction unit configured to generate specific prediction data that includes a predicted value for a future operation state of the target device arranged at the specific position by using operation related information stored in a storage device and the obtained future layout information in a case where the future layout information is obtained, the operation related information being related to an operation state of each of plural types of devices, and the target device being a specific type of device among the plural types of devices.
